Europäisches Patentamt

European Patent Office

Office européen des brevets

(19)

(11) Veröffentlichungsnummer: **0 270 693 B1**

(12) **EUROPÄISCHE PATENTSCHRIFT**

(45) Veröffentlichungstag der Patentschrift: **17.07.91**

(51) Int. Cl.⁵: **G01L 1/16**, G01L 5/16, B23Q 17/09

(21) Anmeldenummer: **86115421.9**

(22) Anmeldetag: **07.11.86**

(54) Mehrkomponenten-Dynamometer.

(43) Veröffentlichungstag der Anmeldung:
**15.06.88 Patentblatt 88/24**

(45) Bekanntmachung des Hinweises auf die
Patenterteilung:
**17.07.91 Patentblatt 91/29**

(84) Benannte Vertragsstaaten:
**AT CH DE FR GB LI**

(56) Entgegenhaltungen:
**US-A- 3 566 163**
**US-A- 3 582 691**
**US-A- 3 614 488**
**US-A- 3 640 130**

(73) Patentinhaber: **Kristal Instrumente AG**
**Eulachstrasse 22**
**CH-8408 Winterthur(CH)**

(72) Erfinder: **Calderara, Reto**
**Sonnhaldenstrasse 9**
**CH-8413 Neftenbach(CH)**
Erfinder: **Wolfer, Peter**
**Alte Steinerstrasse 9**
**CH-8450 Kleinandelfingen(CH)**

(74) Vertreter: **Schmidt, Horst, Dr.**
**Siegfriedstrasse 8**
**W-8000 München 40(DE)**

Rank Xerox (UK) Business Services

## Beschreibung

Die Erfindung betrifft Mehrkomponenten-Dynamometer zum Messen von Kräften und/oder Drehmomenten, insbesondere bei Zerspanungsvorgängen.

Ein bekanntes Dynamometer hat einen relativ komplizierten Aufbau mit sechs in je einer Richtung selektiv empfindlichen Kraftaufnehmern. Die verwendeten Messelemente messen nicht direkt Kräfte, sondern Dehnungen. Dies hat die nachteilige Folge, dass die an sich starren Maschinenteile, zwischen denen die Kräfte und Drehmomente zu bestimmen sind, elastisch miteinander verbunden werden müssen. Dies hat eine relativ niedrige Eigenfrequenz des Messsystems zur Folge, wodurch schnelle Änderungen der Messgrössen, wie sie gerade bei Zerspanungsvorgängen auftreten, nicht mehr erfassbar sind. Zudem ist die Krafteinleitung bei dem bekannten System kompliziert, weil die Kraftaufteilung in die sechs durch die Messanordnung vorgegebenen Komponenten beispielsweise über elastische Schneiden erfolgt. Aus diesen Gründen lässt sich die bekannte Anordnung nicht zu einer kleinen kompakten Baueinheit ausbilden.

Einfacher gestaltet sich die Anordnung von Kraftmesssystemen bei Verwendung von Mehrkomponenten-Messplatteformen, wie sie in der DE-C-19 52 522 beschrieben sind. Diese Plattformen enthalten vier Kraftmesszellen in separaten Gehäusen, von denen jede auf die gleichen Kraftkomponenten anspricht. Als Messzellen können Anordnungen aus Paaren von Piezokristallen verwendet werden, von denen einige druckempfindlich und einige schubempfindlich in zueinander senkrechten Richtungen sind. Derartige Dynamometer weisen zwar für viele Anwendungsfälle eine ausreichende Steifigkeit auf. Die Dynamometer besitzen jedoch nicht die insbesondere bei der Erfassung von Zerspanungsvorgängen gewünschten höheren Eigenfrequenzen, die erforderlich sind, um auch sehr schnell ablaufende Änderungen der Kraftkomponenten zuverlässig erfassen zu können. Zudem sind flache Dynamometer erwünscht, die beim Einbau möglichst wenig Platz beanspruchen. Bekannt ist ferner (US-A-36 14 488) ein Mehrkomponenten-Dynamometer mit einer Vielzahl zwischen einem Paar Krafteinleitungsplatten angeordneten piezoelektrischen Aufnehmerelementen, die jeweils in gleicher Richtung empfindliche Piezoelemente mit zwischenliegender Signalableitungselektrode umfassen. Vor Montage ist eine sorgfältige mit einem entsprechenden Arbeitsaufwand verbundene Ausrichtung der Piezoelemente in die gewünschten Kraftmessrichtungen erforderlich, und ferner ist darauf zu achten, dass die gewählte Ausrichtung bis zur endgültigen Verspannung der Piezoelemente und Elektroden mittels der Krafteinleitungsplatten erhalten bleibt. Eine gewisse Vereinfachung der Arbeit zum Ausrichten der Piezoelemente wird erhalten, wenn gemäss der US-A-35 66 163 die Piezoelemente mit Markierungen versehen sind, die die Richtung ihrer maximalen Empfindlichkeit angeben. Im übrigen entspricht die Anordnung der nach der vorerwähnten Druckschrift. Nachteil der bekannten Dynamometer ist ferner, dass die Anordnungen relativ dick werden, wenn es erwünscht wird, Kräfte in mehreren Richtungen zu erfassen.

Der Erfindung liegt die Aufgabe zugrunde, ein Mehrkomponenten-Dynamometer der eingangs erwähnten Gattung zu schaffen, das den Bau einer flachen Messplattform erlaubt und bei dem unter Einsparung an Zeit und Kosten der Orientierungsaufwand bei der Montage reduziert ist.

Ein Mehrkomponenten-Dynamometer gemäss der Erfindung zum Messen von Kräften und/oder Drehmomenten, insbesondere bei Zerspanungsvorgängen, mit wenigstens einem zwischen einem Paar Krafteinleitungsplatten angeordneten piezoelektrischen Aufnehmerelement, bestehend aus wenigstens zwei Piezoelementen, von denen eines in im wesentlichen der Ebene der Krafteinleitungsplatten schubempfindlich ist, zeichnet sich dadurch aus, dass die Piezoelemente, von denen das andere in einer Richtung im wesentlichen senkrecht zur Ebene der Krafteinleitungsplatten druckempfindlich ist, mit einer zwischenangeordneten isolierenden Trägerplatte verbunden und in Bezug auf das durch die Trägerplatte vorgegebene Koordinatensystem $x_A$, $y_A$, $z_A$ kristallographisch orientiert sind.

Ein anderes Mehrkomponenten-Dynamometer der in Rede stehenden Art zeichnet sich dadurch aus, dass das Aufnehmerelement drei oder mehrere, mit jeweils zwischenangeordneten isolierenden Trägerplatten verbundene Piezoelemente umfasst, welche in Bezug auf das durch die Trägerplatten vorgegebene Koordinatensystem $x_A$, $y_A$, $z_A$ kristallographisch orientiert sind, wobei wenigstens eines der Piezoelemente in einer Richtung im wesentlichen senkrecht zur Ebene der Krafteinleitungsplatten druckempfindlich und wenigstens zwei andere Piezoelemente in im wesentlichen senkrecht zueinander stehenden Richtungen schubempfindlich sind und eines der schubempfindlichen Piezoelemente im wesentlichen parallel zu einer Kantenrichtung der Krafteinleitungsplatten orientiert ist. Vorzugsweise ist gemäss einer Weiterbildung der Erfindung jedes kristollographisch orientierte Aufnehmerelement als Ganzes in Bezug auf das durch die Senkrechte auf den Krafteinleitungsplatten und deren Kanten vorgegebene Koordinatensystem ausgerichtet. Dabei kann gemäss einer anderen Weiterbildung der Erfindung die kristallographische Orientierung der Piezoelemente in Bezug auf die Koordinatenachsen der Trägerplatten durch die Kanten der Piezoelemente oder durch darauf angebrachte Markierungen definiert sein. Bezüglich anderer Weiterbildungen der Erfindung wird auf die Patentansprüche verwiesen.

Durch die Erfindung werden somit Mehrkomponenten-Dynamometer mit vorzugsweise gehäuselosen Aufnehmerelementen bereitgestellt, die kristallographisch so vororientiert sind, dass die Piezoelemente in unterschiedlichen Richtungen empfindlich sind. Das Dynamometer nach der Erfindung ergibt eine wesentlich flachere Konstruktion als herkömmliche Dynamometer, da die Aufnehmerelemente jeweils nur aus wenigen Piezoelementen mit zwischenliegender Trägerplatte aufgebaut sind. Da die Kraftübertragung sowohl über die Aufnehmerelemente als auch durch zusätzliche Ersatzelemente erfolgen kann und sowohl diese wie die Aufnehmerelemente vorzugsweise aus hartem Material bestehen, kann eine flache sehr steife Messplattform gebildet werden, die ohne Schwierigkeiten zwischen Maschinenteilen einbaubar ist und eine sehr hohe Eigenfrequenz aufweist. Dynamometer nach der Erfindung eignen sich daher besonders für dynamische Messungen, z.B. von Zerspanungsvorgängen, bei denen sehr rasche Kraft- und Drehmomentenänderungen auftreten können.

Die Erfindung wird nachfolgend anhand von Ausführungformen und der Zeichnung näher erläutert:

Fig. 1     zeigt das Prinzip der Orientierung eines rechteckigen Aufnehmerelementes mit den Achsen $X_A$, $Y_A$, $Z_A$ in Bezug auf das Koordinatensystem der Krafteinleitungsplatten, X, Y, Z (gezeigt ist nur die untere Krafteinleitungsplatte), sowie das Prinzip der kristallographischen Vororientierung der Piezoelemente $X_K$, $Y_K$, $Z_K$ in Bezug auf die Trägerplatte.

Fig. 2     zeigt ein Dynamometer mit mehreren in verschiedenen Richtungen orientierten rechteckigen Aufnehmerelementen gemäß einer Ausführungsform der Erfindung in Draufsicht.

Fig. 3     zeigt das Dynamometer nach Fig. 2 in perspektivischer Seitenansicht.

Fig. 4     zeigt ein Dynamometer bestückt mit kristallographisch vororientierten Aufnehmerelementen, bestehend aus zwei in verschiedenen Achsen schubempfindlichen Piezoelementen, einem druckempfindlichen Piezoelement sowie zwei zwischenliegenden Trägerplatten, perspektivisch von oben gesehen, ohne obere Krafteinleitungsplatte, gemäß einer anderen Ausführungsform der Erfindung.

Fig. 5     zeigt ein Dynamometer mit rechteckigen Aufnehmer- und Ersatzelementen, wobei einzelne Elemente mit einer Bohrung zwecks Aufnahme einer Vorspannschraube versehen sind (auch die Krafteinleitungsplatten sind durchbohrt) perspektivisch von oben gesehen, ohne obere Krafteinleitungsplatte, gemäss einer dritten Ausführungsform der Erfindung.

Fig. 6     zeigt ein Element mit Vorspannschraube, perspektivisch und geschnitten, des Dynamometers nach Fig. 5.

Fig. 7     zeigt ein Dynamometer, bestehend aus einem Aufnehmerelement mit damit fest verbundenen Krafteinleitungsplatten, gemäss einer vierten Ausführungsform der Erfindung.

Fig. 8     zeigt eine Projektion des Dynamometers in Fig. 7.

Fig. 9     zeigt eine perspektivische Aufsicht eines Dynamometers ohne obere Krafteinleitungsplatte mit vier in einem Rechteck angeordneten Aufnehmerelementen mit je einem in Z-Richtung druckempfindlichen kreisscheibenförmigen Piezoelement, sowie je einem in X- bzw. Y-Richtung schubempfindlichen Piezoelement gemäss einer fünften Ausführungsform der Erfindung.

Fig. 10     zeigt perspektivisch ein einzelnes Aufnehmerelement mit elektrischen Anschlussflächen.

Fig. 11     zeigt eine Messplattform ohne obere Krafteinleitungsplatte von oben, versehen mit in verschiedenen Schubrichtungen X, Y empfindlichen Aufnehmerelementen (alle sind zudem in der z-Richtung druckempfindlich) sowie die Ableitung der Messsignale mittels eines mit Leiterbahnen X', Y', Z' versehenen isolierenden Filmes.

Fig. 12     zeigt einen Querschnitt durch das Dynamometer der Fig. 8 (A-A') ohne Krafteinleitungsplatten.

Fig. 13     zeigt einen analogen Querschnitt, aber an anderer Stelle (B-B')

Fig. 14     zeigt, perspektivisch und ohne obere Krafteinleitungsplatte, ein Dynamometer mit integrierter Messelektronik.

Fig. 15     zeigt ein Dynamometer, bestehend aus einem Aufnehmerelement und zwei Krafteinleitungsplatten, in einer Ausfräsung eines Maschinenteils.

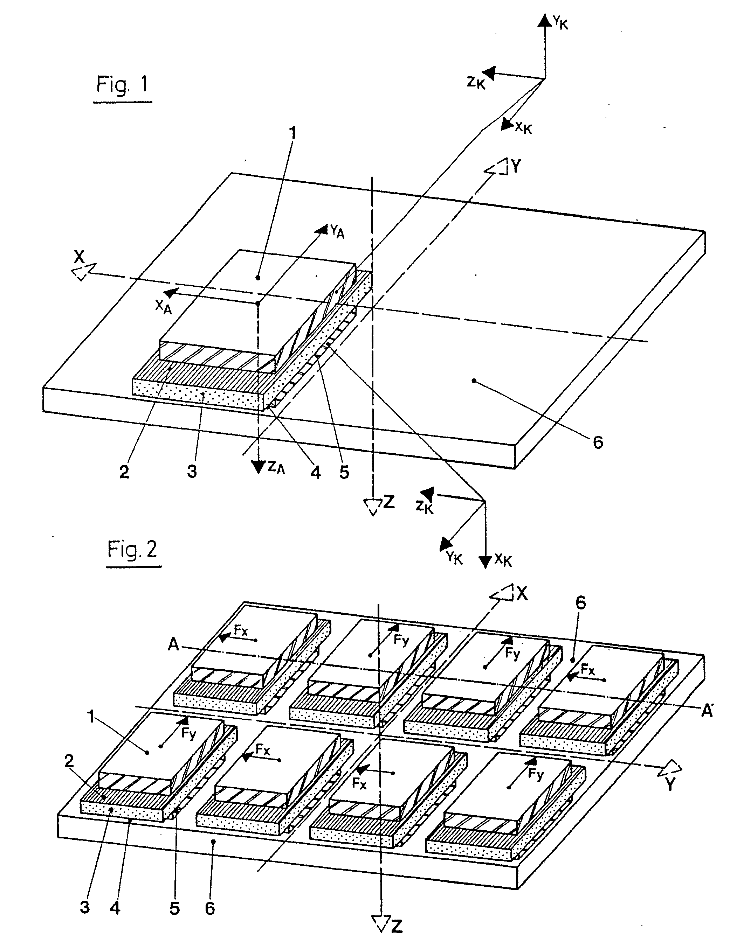

Fig. 1 stellt eine Aufsicht auf eine Krafteinleitungsplatte 6 dar, die mit einem typischen gehäuselosen Aufnehmerelement bestehend aus zwei Piezoelementen 1, 5 und einer zwischenliegenden Trägerplatte 3 bestückt ist. X, Y, Z bezeichnet das geometrische Koordinatensystem des Krafteinleitungssystems, wobei Z senkrecht zu den Krafteinleitungsplatten steht, X senkrecht zu Z, und Y senkrecht zu beiden. Im Falle einer rechteckigen Krafteinleitungsplatte 6 wird man X parallel zu einem Kantenpaar legen, worauf Y parallel zum anderen Kantenpaar zu liegen kommt.

Das Koordinatensystem $X_A$, $Y_A$, $Z_A$ des dargestellten Aufnehmerelementes ergibt sich aus den Kanten der Trägerplatte ($x_A$, $Y_A$) 3 und deren Senkrechten ($Z_A$), wobei natürlich eine vorausgegangene kristallographische Vororientierung der Elemente 1, 5 in bezug auf die Kanten der Trägerplatte 3 sowie kristallographisch fachgerecht geschliffene Piezoelementenoberflächen und -kanten vorausgesetzt werden müssen. Diese kristallographische Vororientierung wird später eingehender erörtert.

Das schubempfindliche Piezoelement 1 ist so geschliffen, dass seine Längskanten genau parallel zu den kristallographischen X- und Z-Achsen (hier mit $X_K$ und $Z_K$ bezeichnet) verlaufen, während die kristallographische Y-Achse (hier mit $Y_K$ bezeichnet) senkrecht zur grössten Fläche des Piezoelementes 1 steht. Die Piezoelemente 1, 5 und die Trägerplatte 3 werden plan-parallel geschliffen und zur Trägerplatte 3 mit einer Anschlagvorrichtung parallel zu den Kristallkanten ausgerichtet. Wenn die Kanten der rechteckig dargestellten Trägerplatte 3 ebenso genau senkrecht zueinander stehen, so kann das Element rein mechanisch durch Parallelstellung der Piezoelementenkanten und der Trägerplattenkanten auf der Trägerplatte orientiert fixiert werden, wobei für die spätere richtungsgemässe Orientierung des gesamten Aufnehmerelementes in bezug auf das geometrische Koordinatensystem der Krafteinleitungsplatten beispielsweise beim seitlichen Austrittspunkt der positiven kristallographischen Z-Richtung ($Z_k$) aus dem Schubelement eine in der Zeichnung nicht dargestellte Marke angebracht werden kann.

In analoger Weise wird das Druckelement 5 kristallographisch fachgerecht geschnitten, wobei hier die kristallographischen Y- und Z-Richtungen (mit $Y_K$ und $Z_K$ bezeichnet) parallel zu den Längskanten des Piezoelementes verlaufen. Die orientierte Fixierung auf der Trägerplatte 3 erfolgt auf deren anderer Seite, gegebenenfalls im selben Arbeitsgang. Die erforderliche Elementenbearbeitung wurde hier in vereinfachter Weise als Schleifen beschrieben. Selbstverständlich sind zu Erreichung der erforderlichen Genauigkeit auch Läpp- und Polieroperationen notwendig.

Fig. 1 zeigt noch weitere Einzelheiten der oben dargestellten bevorzugten Ausführungsform des Aufnehmerelementes. Die aus isolierendem Material bestehende Trägerplatte 3 ist beidseitig mit je einer elektrisch leitenden Schicht 2, 4 versehen zwecks Ableitung der Messignale, auf die später genauer eingegangen wird.

Die Zeichnung stellt dar, dass das vororientierte Aufnehmerelement mit dem bereits geschilderten Koordinatensystem $X_A$, $Y_A$, $Z_A$ als Ganzes in bezug auf das Koordinatensystem X, Y, Z des Krafteinleitungssystems orientiert wird, was im Falle rechteckiger Aufnehmerelemente und rechteckiger Krafteinleitungsplatten durch Parallelstellung der ensprechenden Kanten geschieht.

Das typische Aufnehmerelement besteht aus je einem in einer Richtung schubempfindlichen 1 und einem senkrechten zu den Krafteinleitungsplatten druckempfindlichen Piezoelement 5, also zwei Piezoelementen, anstatt der üblichen sechs.

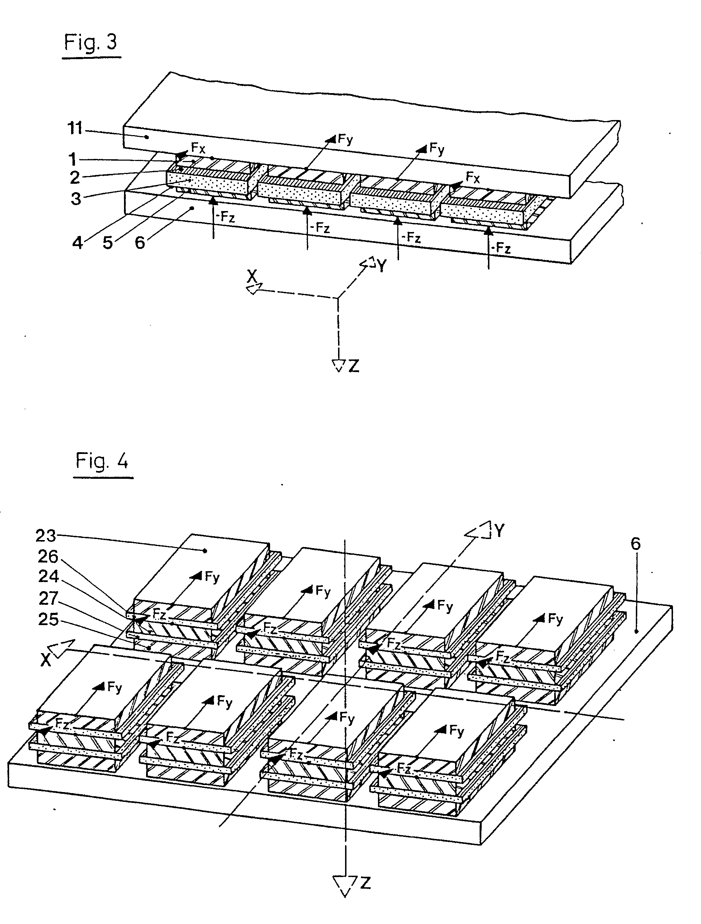

Fig. 2 zeigt eine Aufsicht auf eine mit mehreren kristallographisch vororientierten rechteckigen Aufnehmerelementen ohne Gehäuse, gemäss Fig. 1 bestückte Krafteinleitungsplatte 6. Die Orientierung der Einzelelemente in bezug auf das Koordinatensystem X, Y, Z der Krafteinleitungsplatte 6 erfolgt als Ganzes während der Montage, wie oben geschildert. Jedes Element ist druckempfindlich in der Z-Richtung (vergleiche Bezugszeichen $F_Z$ in Fig. 3) und schubempfindlich in der X- oder Y-Richtung, dargestellt durch die Schubkräfte $F_X$, und $F_Y$, nicht aber in beiden zugleich, wie bei konventionellen Dynamometern. Da sich dieselben Messmöglichkeiten ergeben wie im Falle, wo alle Einzelelemente sowohl in der X-, wie in der Y-Richtung schubempfindlich sind, ist eine Reduktion der Piezoelementen ohne Einschränkung der Anwendungsmöglichkeiten möglich. Das in Fig. 2 dargestellte, mit rechteckigen Aufnehmerelemten vollbestückte Dynamometer repräsentiert eine Ausführungsform mit hoher Messempfindlichkeit und grossem Messbereich. Die sonstigen Vorteile werden später geschildert.

Fig. 3 zeigt, zwecks Verdeutlichung, einen perspektivischen Querschnitt durch die Messplattform, wodurch beide Krafteinleitungsplatten 6, 11 sichtbar werden. Charakteristisch ist für das Dynamometer, dass die Aufnehmerelemente druckempfindlich sind, jedes für sich aber nur in einer Richtung schubempfindlich ist, wobei einzelne Aufnehmerelemente in der X -, andere in der Y-Richtung schubempfindlich sind. Die Kraftempfindlichkeitsrichtungen sind zeichnerisch durch die Kraftkomponenten $F_x$, $F_y$, $F_z$ dargestellt. Indem man die Forderung fallen lässt, dass jedes Aufnehmerelement für sich in zwei Richtungen schubempfindlich ist, lässt es sich mit weniger Piezoelementen bauen (mit zwei anstatt der üblichen sechs), wodurch teure Materialien, aber auch Arbeitskosten beispielsweise bei den Verfahrensschritten Fabrikation der Elemente (schneiden läppen, polieren), Tests, Orientierung in bezug auf das Koordinatensystem X, Y, Z der Krafteinleitungsplatten, eingespart werden. Wie schon eingangs erwähnt, lässt sich das Dynamometer durch Verwendung gehäuseloser und niedrigerer Aufnehmerelemente flacher und dadurch weniger nachgiebig konstruieren, insbesondere auch bei der bevorzugten Verwendung von Aufnehmerelementen aus rechteckigen Elementen und Trägerplatten, die eng aneinander gefügt werden können. Durch deren starres Material wird das Dynamometer versteift und erreicht aus den genannten Gründen sehr hohe Eigenfrequenzen. Die mögliche Anordnung einer grossen Zahl von Aufnehmerelementen ermöglicht zudem eine hohe Messempfindlichkeit sowie eine hohe Belastungsgrenze. Auch wenn nicht jedes einzelne Aufnehmerelement wie bisher auf alle drei Kraftkomponenten (Komponenten in X-, Y- und Z-Richtung) empfindlich ist, sondern nur die Gesamtheit der Elemente, so sind in den hier betrachteten Anwendungen, speziell bei Zerspanungsvorgängen, meist Anordnungen und elektrische Schaltungen denkbar, welche dieselben Messgrössen erfassen lassen wie mit Drei-Komponenten-Messzellen. Die unterschiedlichen Empfindlichkeitsrichtungen der Piezoelemente ermöglichen die Messung aller drei Kraftkomponenten und die Berechnung von Drehmomenten und Kraftangriffspunkt.

Fig. 4 zeigt eine Krafteinleitungsplatte 6, die mit einer anderen Ausführungsform des Aufnehmerelementes bestückt ist. Diese besteht aus zwei schubempfindlichen Piezoelementen 23, 25, wovon das eine in der Y-Richtung, das andere in der dazu senkrechten X-Richtung schubempfindlich ist, einem in der Z-Richtung druckempfindlichen Piezoelement 24, sowie zwei zwischenliegenden Trägerplatten 26, 27. Die Schubempfindlichkeiten sind in der Figur durch die entsprechenden Kräfte $F_X$, $F_Y$ angegeben. Die auf den druckempfindlichen Piezokristall 24 längs der Z-Achse wirkende Druckkraft ist nicht eingezeichnet.

Charakteristisch ist auch für dieses Aufnehmerelement, dass es gehäuselos ist und das die Piezoelemente 23, 24, 25 in bezug auf die Trägerplatten 26, 27 kristallographisch vororientiert sind. Dies geschieht auf dieselbe Art und Weise, wie sie unter Fig. 1 beschrieben wurde. Auch hier bewirkt die kristallographische Vororientierung Einsparungen bei Material- und Arbeitskosten. Anwendung findet die oben beschriebene Ausführungsform des Aufnehmerelementes vor allem bei Dynamometern mit kleinen lateralen Abmessungen, weil hier zu wenig Platz vorhanden ist für die Trennung der Aufnehmerelemente in solche, die nur in der X-Richtung, und andere, die nur in der Y-Richtung schubempfindlich sind. Das Dynamometer muss unter einer Vorspannung stehen, die genügend gross ist, um auch die maximal auftretenden Zugkräfte messen zu können.

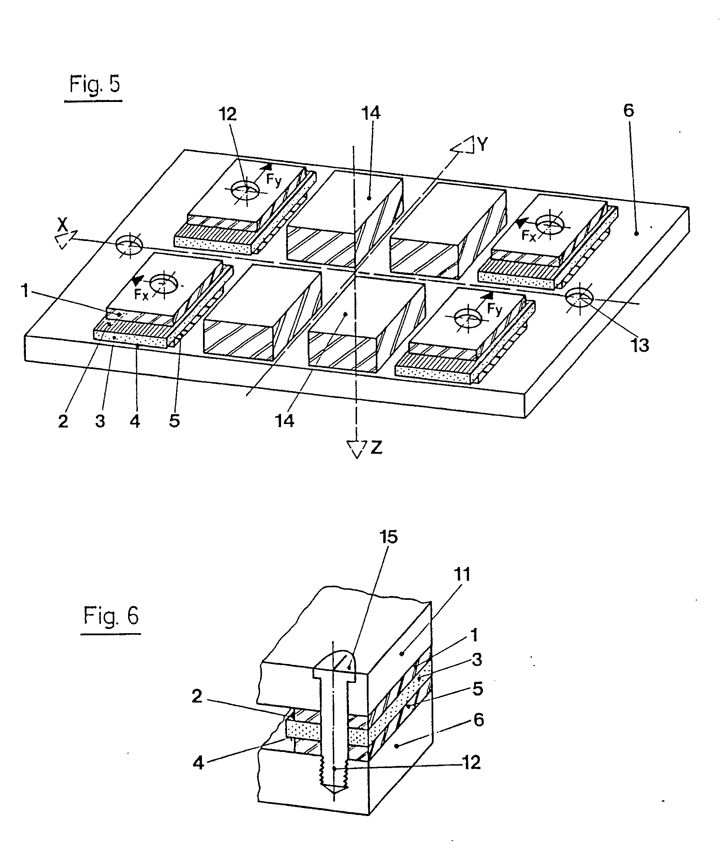

In der in Fig. 5 dargestellten Ausführungsform sind einzelne Aufnehmerelemente mit einer zentralen Bohrung 12 versehen, durch die hindurch je eine Vorspannschraube, welche auch die Krafteinleitungsplatten durchdringt, die Piezoelemente zusammenspannt. Auf diese Weise wird eine sehr gleichmässige, zur Elementenachse rotationssymmetrische Spannungsverteilung am Aufnehmerelement erzielt, wodurch erreicht wird, dass Nebensprecheffekte vernachlässigbar klein werden. Die Bohrungen 13 an den seitlichen Rändern der Krafteinleitungsplatten dienen dazu, die äusseren Partien der Messplattform unter Vorspannung zu halten. Ausser Aufnehmerelementen zeigt Fig. 5 auch Ersatzelemente 14. Diese dienen der definierbaren Kraftaufteilung, um die Messplattform den Anforderungen verschiedener Anwendungen leicht anpassen zu können. So kann mit demselben Aufnehmerelementetyp ein sehr grosser Bereich von Kräften gemessen werden, je nach dem Ausmass der Kraftteilung. Die Verteilung der Ersatzelemente 14 kann auch derart vorgenommen werden, dass die Kraftteilung örtlich verschieden ist. Die Ersatzelemente 14 besitzen ähnliche Eigenschaften in bezug auf Elastizität und Ausdehnungskoeffizient und bestehen somit vorteilhafterweise aus demselben Material wie die Aufnehmerelemente. Beide können zentrale Bohrungen zwecks Aufnahme von Vorspannschrauben besitzen.

Fig. 6 zeigt ein einzelnes, mit einer Vorspannschraube 15 vorgespanntes Aufnehmerelement im Querschnitt. Wie bis anhin bedeuten 6, 11 die Krafteinleitungsplatten, 1 bis 5 das Aufnehmerelement 12 die zentrale Bohrung und 15 die Vorspannschraube.

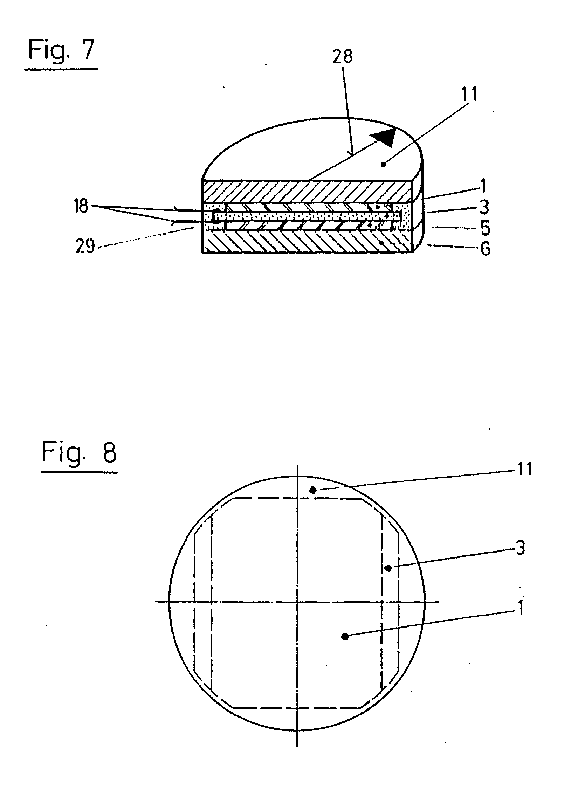

Fig. 7 zeigt ein Dynamometer, das nur aus einem Aufnehmerelement mit damit fest verbundenen Krafteinleitungsplatten besteht.

Oft liegen mehrere Aufnehmerelemente zwischen einer oberen und einer unteren gemeinsamen Krafteinleitungsplatte und werden bei der Montage in bezug auf das Koordinatensystem X, Y, Z der Krafteinleitungsplatten orientiert. Den meisten hier dargestellten Figuren liegen solche Anwendungsfälle zugrunde. Das schubempfindliche Piezoelement kann eine Markierungslinie 28 tragen, welche als Orientierungshilfe die Richtung der Schubempfindlichkeit ziegt. Das Einsetzen der Aufnehmer zwischen die Krafteinleitungsplatten erfolgt beim Hersteller. Der Kunde montiert üblicherweise fertige Messplattformen. In anderen Fällen ist es erwünscht, nicht fertige Messplattformen zwischen die kraftübertragenden Maschinenteile zu montieren, sondern einzelne Aufnehmerelemente. In diesen Fällen kann die Anordnung der Elemente sehr anwendungsspezifisch gestaltet und auch durch den Kunden vorgenommen werden. (Ein solcher Anwendungsfall wird in Figur 15 dargestellt werden). Voraussetzung dazu ist, dass die Krafteinleitung auf die einzelnen Elemente erfolgt, woraus folgt, dass diese beidseitig je eine Krafteinleitungsplatte tragen müssen. 11 bezeichnet die obere und 6 die untere Krafteinleitungsplatte. Eingezeichnet ist auch die Markierungslinie 28, welche die Richtung der Schubempfindlichkeit angibt. Es ist vorteilhaft, das Element mit einer Vergussmasse 29, abzudichten. 18 bezeichnet die auf der Unter- und Oberseite der Trägerplatte angelöteten Anschlussstellen.

Fig. 8 zeigt das eben geschriebene Aufnehmerelement in Projektion. Gestrichelt eingezeichnet sind das obere Piezoelement 1 und die Trägerplatte 3, beide in einer bevorzugten Einführungsform, nämlich als an den Ecken abgerundete rechteckige Platten.

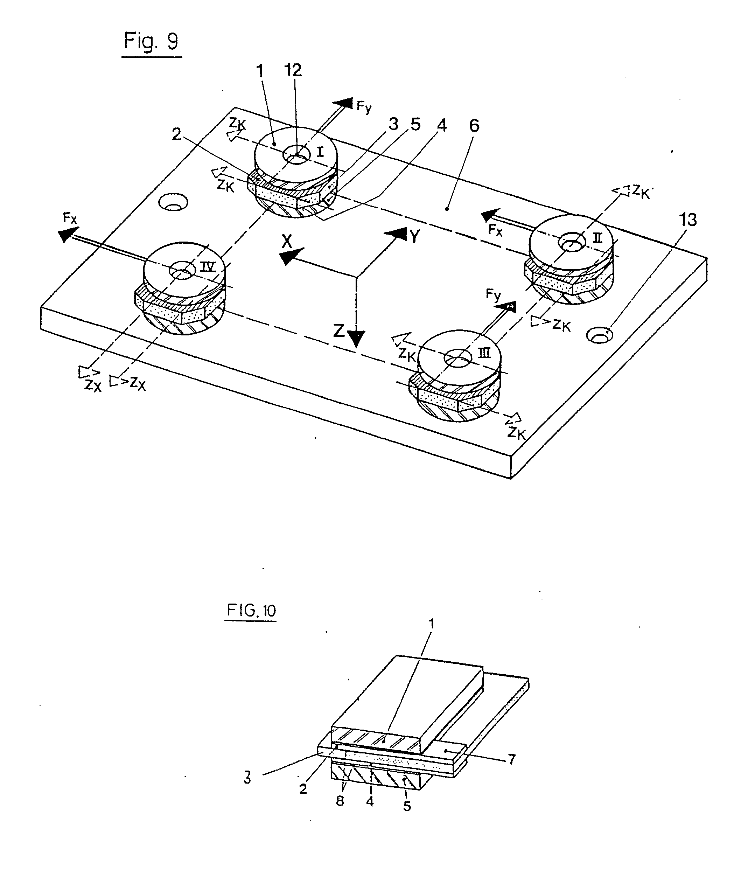

Fig. 9 zeigt ein Dynamometer mit vier in einem symmetrisch zum Achsenkreuz des Krafteinleitungssystems X, Y, Z liegenden Rechteck angeordneten Aufnehmerelementen, in perspektivischer Darstellung, ohne obere Krafteinleitungsplatte. Die prinzipielle Anordnung wurde bereits in der eingangs erwähnten DE-PS 19 52 522 dargestellt. Es lassen sich damit 6-Komponenten-Messungen (Drei-Kraft-Komponenten) $F_X$, $F_Y$, $F_Z$ und drei Drehmomentkomponenten $M_X$, $M_Y$, $M_Z$ durchführen, es können aber auch weniger Komponenten gemessen werden, bei der Anwendung als Zerspanungsdynamometer beispielsweise nur die Kraftkomponenten $F_X$, $F_Y$, $F_Z$, deren Angriffspunkt in diesem Falle ausserhalb des durch die Aufnehmerelemente gebildeten Rechteckes zu liegen kommt. In der dargestellten Anordnung messen je zwei diagonal gegenüberliegende Aufnehmerelemente die Kraftkomponenten in der X-Richtung, $F_X$, die zwei anderen die Kraftkomponenten der y-Richtung, $F_Y$. Alle messen zudem die Druckkräfte $F_Z$.

In der dargestellten Anordnung umfasst jedes Aufnehmerelement nur zwei Piezoelemente 1, 5 (eines schub-, das andere druckempfindlich), während die bisher verwendeten Messzellen sechs Piezoelemente umfassen. Die Messanordnung mit vier Aufnehmerelementen wie oben dargestellt, erlaubt somit eine Reduktion von 24 Piezoelementen auf deren 8, wodurch, wie bereits erwähnt, teures Material, Fabrikationsarbeit, Orientierungs- und Testarbeit eingespart werden. Die dargestellte Anordnung verwendet bloss zwei Typen von Aufnehmerelementen, nämlich solche, bei denen die kristallographischen Z-Achsen ($Z_K$) parallel (Element I, IV) und solche, bei denen sie antiparallel liegen (Element II, III). Nebst der Reduktion der Zahl der Piezoelemente und der damit verbundenen Kostenreduktion erlaubt die dargestellte Anordnung mit den neuartigen Aufnehmerelementen gemäss Fig. 4 die Herstellung von dünneren, steiferen Messplattformen mit höheren Eigenfrequenzen.

Erfindungsgemäss können auch kreisscheibenförmige Piezoelemente, 1, 5 für Aufnehmerelemente verwendet werden, wie in der Fig. 7 dargestellt. Diese Lösung liegt dann nahe, wenn das Dynamometer nur mit wenigen Elementen besetzt werden soll, wenn also genügend Platz vorhanden ist. Ein Vorteil der kreisscheibenförmigen Piezoelemente liegt darin, dass die Vorspannung die Gefahr des Uebersprechens verringert.

Die Anordnung der vier Aufnehmerelemente derart, dass zwei diagonal liegende in der X-Schubrichtung, die anderen zwei in der Y-Schubrichtung messen, reduziert ebenfalls das Uebersprechen.

Die in Fig. 9 dargestellten vier Aufnehmerelemente liegen zwischen zwei Krafteinleitungsplatten. Erfindungsgemäss ist aber auch vorgesehen, dass die Krafteinleitung über Krafteinleitungsplatten erfolgt, die mit jedem einzelnen Aufnehmerelement fest verbunden sind. Ein solches Element ist in den Fig. 7 und 8 dargestellt. Das Dynamometer in Form einer Messplattform, wie in Fig. 9 dargestellt, wird durch den Hersteller als fertiges Einbauelement geliefert. Der Vorteil der Anwendung von Aufnehmerelementen gemäss Fig. 7 und 8 kann darin liegen, dass die Wahl der Anordnung, etwa die Dimension des oben genannten Rechteckes, freier ist. Die Anordnung und beispielsweise Einfügung zwischen zwei Maschinenteilen kann durch den Kunden selber vorgenommen und den Dimensionen verschieden grosser Maschinen angepasst werden. Es sind natürlich die verschiedensten Anordnungen von Aufnehmerelementen möglich, je nach den Erfordernissen der Anwendung. Es ist auch möglich, Anfnehmerelement gemäss den Fig. 7 und 8 nicht zwischen zwei Maschinenteilen, sondern in einer Ausfräsung eines Maschinenteils anzuordnen. Einzelheiten dazu werden in der Beschreibung von Fig. 15 genannt. Um eine Fixierung der einzelnen Elemente in einer bestimmten Anordnung zu erreichen, kann es vorteilhaft sein, beispielsweise die Ausfräsungen in einem Maschinenteil mit passenden Aussparungen und Auflageflächen zu versehen, in welche die Aufnehmerelemente eingebracht und in der anwendungsgemässen Orientierung, beispielsweise durch Festkitten fixiert werden.

Fig. 10 zeigt eine Ausführungsform der Erfindung mit elektrischen Anschlüssen 7 für die Abführung der Messignale, sowie für den elektrischen Kontakt zwischen den elektrisch leitenden Schichten, 2, 4 auf der Trägerplatte 3 und den Piezoelementen 1, 5. Im allgemeinen werden die den Krafteinleitungsplatten anliegenden Elementenoberflächen auf Erdpotential gesetzt. Dann entstehen bei Krafteinwirken auf den der elektrisch isolierenden Trägerplatte anliegenden Elementenoberflächen Ladungen, die zur Messelektronik geführt werden müssen. Dies bedingt einerseits elektrisch leitende Schichten auf beiden Seiten der Trägerplatte, flächendeckend oder als Leiterbahnen, andererseits eine Fixierung der Piezoelemente auf der Trägerplatte, die elektrisch gut leitet. Diese Fixierung geschieht vorteilhafterweise mit einem elektrisch leitenden Kleber, der in einer dünnen Schicht 8 zwischen Piezoelement und den elektrisch leitenden Schichten 2, 4 der Trägerplatte 3 aufgebracht ist.

Für ein Aufnehmerelement gemäss Fig. 6 - 8 und 10 werden nur zwei elektrische Anschlüsse benötigt, während bei konventioneller Zweikomponentenaufnehmern noch zusätzlich zwei Signalelektroden und mindestens eine intern verbundene Masseelektrode erforderlich ist.

Durch die erfindungsgemässen Aufnehmerelemente können also elektrische und mechanische Komponenten sowie Arbeitsaufwand eingespart werden.

Die elektrischen Verbindungen zwischen den Aufnehmerelementen und Anschlusselementen wie Kabel, Stecker oder Schaltungsplatinen können beispielsweise durch Anlöten von Drähten oder Metallstreifen an die Kontaktflächen 7 der Trägerplatte 3 hergestellt werden.

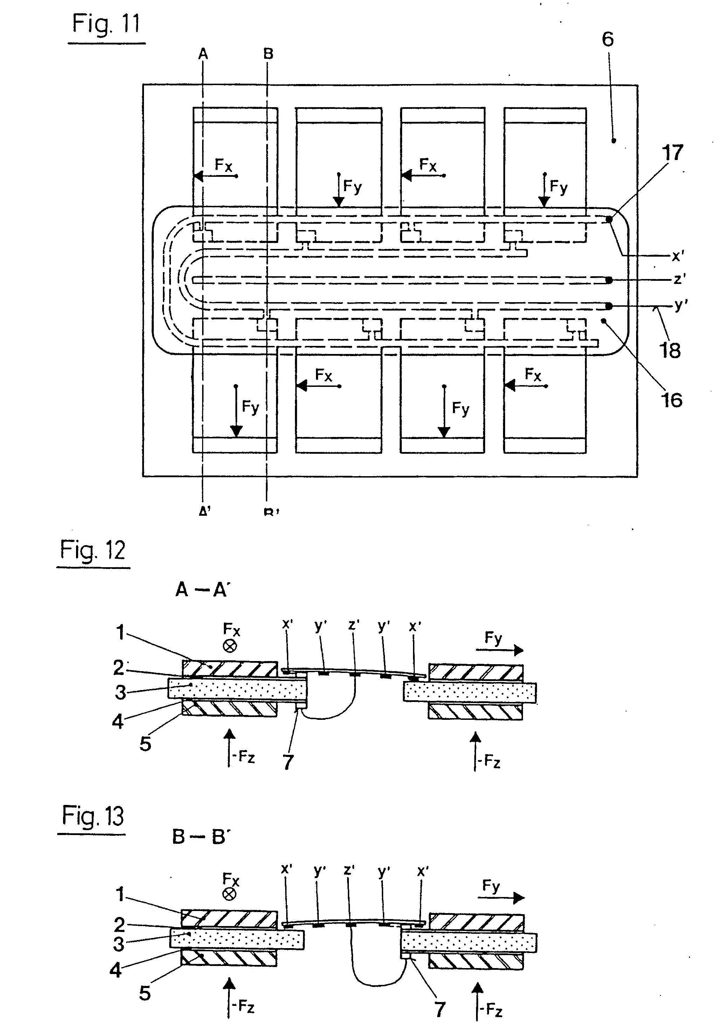

Fig. 11 zeigt eine moderne Ausführungsform der Signalableitung. Dargestellt ist eine Aufsicht auf die untere Krafteinleitungsplatte 6, auf welcher acht in der X-, bzw. Y-Richtung schubempfindlich und in der Z-Richtung druckempfindliche Aufnehmerelemente montiert sind. Die Signalableitung des einzelnen Elementes erfolgt über die in Fig. 10 dargestellten Anschlussflächen. Der in Fig. 11 in Aufsicht dargestellte Film 16 besteht auf einer metallisierten Kunststofffolie, bei der das Metall so weggeätzt wurde, dass die eingezeichneten U-förmigen Leiterbahnen X', Y', Z', stehen blieben, welche auf der rechten Seite der Zeichnung in Lötaugen 17 einmünden, von denen aus die aufsummierten Signale für $F_X$, $F_Y$, $F_Z$ beispielsweise über eingelötete Drähte 18, abgeleitet werden können. Die elektrische Verbindung zwischen den elektrisch leitenden Schichten der Aufnehmerelemente und den entsprechenden Leiterbahnen X', Y', Z' des Films kann durch Löten an den Anschlussflächen 7 erfolgen, welche durch einen über die Fläche der Piezoelemente 1, 5 herausragenden Teil der elektrisch leitenden Beschichtungen 2, 4 Trägerplatten 3 gebildet werden. Durch eine geeignete U-förmige Ausbildung der Leiterbahnen 17 kann erreicht werden, dass die von X-Schubkräften stammenden Schubsignale der Leiterbahn Z', zugeleitet werden, die von Y-Schubkräften stammenden der Leiterbahn Y' und dass die Leiterbahnen X' und Y'sorgfältig voneinander isoliert sind. Die Ableitung der Drucksignale erfolgt über eine geradlinige Leiterbahn Z', die mit den Anschlussflächen (7), welche an die druckempfindlichen Piezoelemente angrenzen, verbunden werden.

Die Kontakt- und Isolationsverhältnisse werden durch zwei Querschnitte A-A' und B-B' der Fig. 11 in den Fig. 12 und 13 verdeutlicht. Mechanisch wird der Film durch 8 Kontaktpunkte getragen, wenn man die Kontakte über Drähte nicht mitzählt.

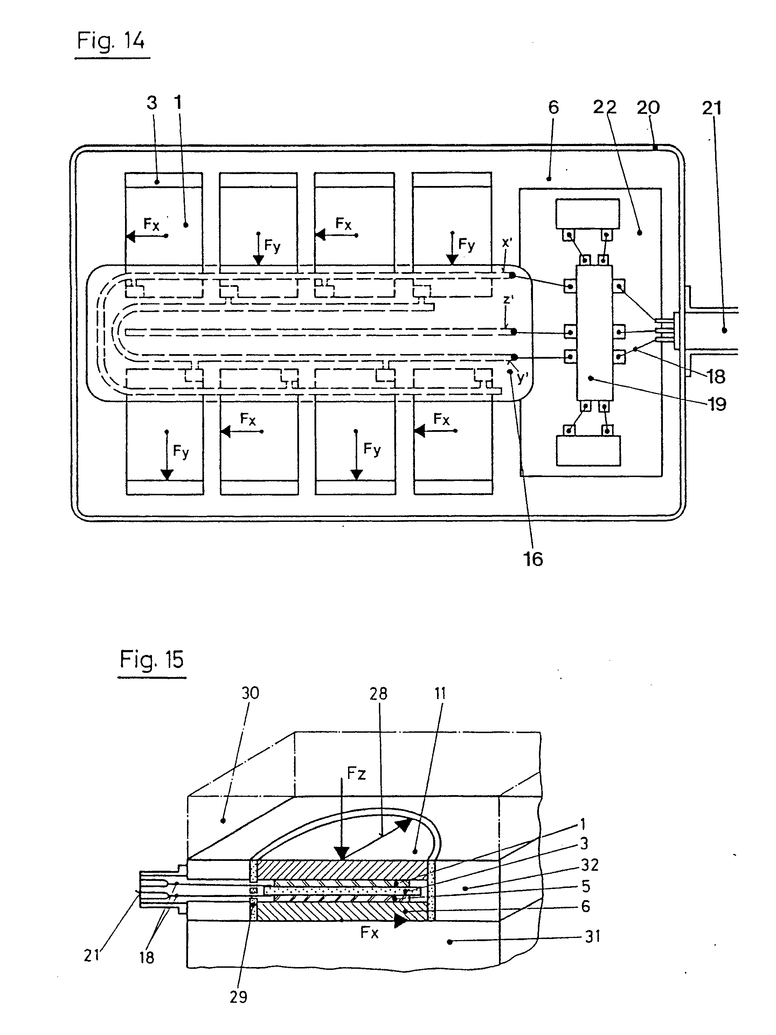

Fig. 14 zeigt eine Aufsicht auf eine mit Aufnehmerelementen bestückte Krafteinleitungsplatte 6 mit Signalabführung über die Leiterbahnen X', Y', Z' eines Films 16. Die Messelektronik und die Auswertungslogik, beispielsweise mit Analog-Digital-Wandlern, Operationsverstärkern und programmierten Speichern, können auf den Film 16 oder auf eine Montageplatte 22 aufgebracht und somit in das Dynamometer integriert werden. Diese Integration bietet Vorteile speziell bei Anwendungen, bei denen Miniaturisierung und geringe Anfälligkeit für Störsignale, wie zum Beispiel solche elektromagnetischer Art wichtig sind. Dies ist der Fall beispielsweise in einem Maschinenraum. Ueberdies sind die Ausgangssignale bereits kalibriert, müssen also nicht durch den Anwender kalibriert werden, wodurch auch die Austauschbarkeit des elektronischen Messteiles verbessert ist. Dargestellt sind auch das Gehäuse 20 mit angeschlossenem Stecker 21.

Fig. 15 zeigt eine typische Anwendungsform des in den Figuren 7 und 8 bereits dargestellten Aufnehmerelementes, das mit den Krafteinleitungsplatten fest verbunden ist.

Zwecks Messung eines signifikanten Kraftanteiles, in einer oder mehreren Komponenten, wird das Aufnehmerelement beispielsweise in eine Ausfräsung eines Maschinenteils eingebracht, und je nach Bedarf zusätzlich eine Distanzierplatte 32, die in ihrer Höhenabmessung so dimensioniert werden kann, dass bei Zusammenpressen der Maschinenteile 30 und 31 einerseits im Aufnehmerelement die gewünschte Vorspannung erzeugt und anderseits der Kraftanteil bestimmt werden kann, der durch das Aufnehmerelement aufgenommen wird. Durch Wahl eines geeigneten Materials, mit passendem E-Modul, sowie eines bestimmten Höhenunterschiedes (in Fig. 15 nicht dargestellt) zwischen Distanzierplatte und Aufnehmerelement und einer angepassten Wahl der Querschnitte von diesen und der Distanzierplatte lassen sich somit die Vorspannung sowie der Anteil des Kraftnebenschlusses und auch Messbereich und Messempfindlichkeit einstellen. Eingezeichnet sind in Fig. 15 noch die vorzugsweise in einer Ausfräsung der Distanzierplatte 32 angeordneten elektrischen Ableitungen 18, der Anschlussstecker 21, sowie eine Vergussmasse 29, die sowohl zwischen die Krafteinleitungsplatten 6, 11 des Aufnehmerelementes 1, 3, 5, 6, 11, wie auch in den ringförmigen Spalt zwischen diesem und der Distanzierplatte 32 zwecks Abdichtung und Fixierung ganz oder teilweise raumausfüllend eingebracht werden kann. Es kann vorteilhaft sein, vor Einführen in die Ausfräsung das Aufnehmerelement in die zur Messung der Schubkräfte geeignete azimutale Lage in einer zur Fassung des Aufnehmerelementes geeigneten Aussparung in der Distanzierplatte 32 zu bringen, dann die untere Krafteinleitungsplatte 6 mit der Distanzierplatte 32 fest zu verkitten und anschliessend das Aufnehmerelement mit der Distanzierplatte als fest vorgefügte Einheit in die Ausfräsung des Maschinenteils einzufügen. Es ist auch möglich, beispielsweise zwecks Vereinfachung des Herausführens der elektrischen Ableitungen 18, nur einen Teil der Distanzierplatte 32 mit dem Aufnehmerelement zu einer fest vorgefügten Einheit zu verbinden, die als Ganzes in die Ausfräsung des Maschinenteils eingeschoben wird, und den ergänzenden Teil erst nachträglich einzuschieben. Anstatt in einer Ausfräsung eines Maschinenteils kann das Aufnehmerelement auch zwischen zwei planen Maschinenteilen angebracht werden.

Wie schon vorher ausgeführt wurde, lassen sich durch das Standard-Aufnehmerelement eine Druck- und eine Schubkraft bestimmen, hier dargestellt als $F_Z$ und $F_X$. Die Orientierung des Elementes in bezug auf das Koordinatensystem der Maschinenteile kann durch eine Markierungslinie 28 auf einer Krafteinleitungsplatte 11 erfolgen. Für bestimmte Anwendungen sind Aufnehmerelemente zweckmässig, welche ausser der Druckkomponenten zwei Schubkomponenten, $F_X$ und $F_Y$, messen können. Dies kann erfindungsgemäss erreicht werden mit einem Aufnehmerelement, welches aus zwei um 90 Grad in der Platfläche der Krafteinleitungsplatte gedrehten Aufnehmerelementen zusammengesetzt ist, oder vorzugsweise (vgl. Fig. 4) mit einem Aufnehmerelement, welches ein druckempfindliches 25 und zwei schubempfindliche Piezoelemente 23, 24, deren Empfindlichkeits richtungen senkrecht zueinander in der Plattenebene liegen, erreicht werden.

Die dargestellten Ausführungsformen des erfindungsgemässen Mehrkomponentendynamometers zum Messen von Kräften und Drehmomenten zeigen, dass mit kristallographisch vororientierten Aufnehmerelementen der Bau von Dynamometern erheblich rationeller durchgeführt werden kann, indem sowohl Material- wie Arbeitskosten eingespart werden können. Speziell das aus zwei Piezoelementen und einer zwischenliegenden Trägerplatte bestehende Aufnehmerelement erlaubt eine Reduktion der Anzahl der Piezoelemente, aber auch der elektrischen Anschlüsse sowie der Elemententypen. Zudem werden die so konstruierten Dynamometer flach und dadurch leicht einbaubar, aber auch starr, wodurch sehr hohe Eigenfrequenzen erreicht werden können. Dies macht sie sehr geeignet für dynamische Messungen mit sehr raschen Kraftänderungen, wie sie beispielsweise bei Zerspanungsvorgägen auftreten.

Ein besonderer Vorteil ist der Wegfall des bisher für jedes einzelne Aufnehmerelement notwendigen Gehäuses, wodurch die Aufnehmerelemente mit minimalem Platzbedarf in die Krafteinleitungsplatten des Dynamometers eingebaut werden können. Die Ausführungsform des Dynamometers mit nur einem Typ des Aufnehmerelementes, das mit den Krafteinleitungsplatten fest verbunden ist, zeichnet sich aus durch universelle Anpassungsfähigkeit an die Erfordernisse der verschiedensten Anwendungen, Anordnung und Einbaugeometrie können durch den Anwender in weiten Grenzen variiert werden.

Bei den Piezoelementen handelt es sich vorzugsweise um kristalline Piezomaterialien, doch ist die Erfindung hierauf nicht beschränkt. Sie umfasst vielmehr auch andere Piezomaterialien, wie nicht-Kristalline Piezokeramik, mit ausgeprägten Kraftempfindlichkeitsrichtungen, welche analog zu den beschriebenen Ausführungsformen orientierbar sind.

**Patentansprüche**

1. Mehrkomponenten-Dynamometer zum Messen von Kräften und/oder Drehmomenten, insbesondere bei Zerspanungsvorgängen, mit wenigstens einem zwischen einem Paar Krafteinleitungsplatten (6,11) angeordneten piezoelektrischen Aufnehmerelement, bestehend aus wenigstens zwei Piezoelementen (1,5,23,24,25), von denen eines in im wesentlichen der Ebene der Krafteinleitungsplatten schubempfindlich ist, dadurch gekennzeichnet, dass die Piezoelemente (1,5,23,24,25), von denen das andere in einer Richtung im wesentlichen senkrecht zur Ebene der Krafteinleitungsplatten (6,11) druckempfindlich ist, mit einer zwischenangeordneten isolierenden Trägerplatte (3,27) verbunden und in Bezug auf das durch die Trägerplatte (3,27) vorgegebene Koordinatensystem $x_A$, $y_A$, $z_A$ kristallographisch orientiert sind.

2. Dynamometer nach Anspruch 1, dadurch gekennzeichnet, dass bei wenigstens zwei piezoelektrischen Aufnehmerelementen das schubempfindliche Piezoelement (1) eines der Aufnehmerelemente in einer Richtung im wesentlichen parallel zu einer Kantenrichtung der Krafteinleitungsplatten (6,11) und das des anderen Aufnehmerelementes in einer dazu im wesentlichen senkrechten Richtung auf Schubkräfte ansprechend ausgerichtet ist.

3. Mehrkomponenten-Dynamometer zum Messen von Kräften und/oder Drehmomenten, insbesondere bei Zerspanungsvorgängen, mit wenigstens einem zwischen einem Paar Krafteinleitungsplatten (6,11) angeordneten piezoelektrischen Aufnehmerelement, bestehend aus wenigstens zwei Piezoelementen (23,24,25), von denen wenigstens zwei im wesentlichen in der Ebene der Krafteinleitungsplatten schubempfindlich sind, dadurch gekennzeichnet, dass das Aufnehmerelement drei oder mehrere, mit jeweils zwischenangeordneten isolierenden Trägerplatten (26,27) verbundene Piezoelemente (23,24,25) umfasst, welche in Bezug auf das durch die Trägerplatten (26,27) vorgegebene Koordinatensystem $x_A$, $y_A$, $z_A$ kristallographisch orientiert sind, wobei wenigstens eines der Piezoelemente in einer Richtung im wesentlichen senkrecht zur Ebene der Krafteinleitungsplatten druckempfindlich und die wenigstens zwei anderen Piezoelemente in im wesentlichen senkrecht zueinander stehenden Richtungen schubempfindlich sind und eines der schubempfindlichen Piezoelemente im wesentlichen parallel zu einer Kantenrichtung der Krafteinleitungsplatten orientiert ist.

4. Dynamometer nach Anspruch 1, 2 oder 3, dadurch gekennzeichnet, dass die kristallographische Orientierung der Piezoelemente (1,5,23,24,25) in Bezug auf die Koordinatenachsen $x_A$, $y_A$, $z_A$ der Trägerplatten (3,26,27) durch die Kanten der Piezoelemente oder Marken auf den Piezoelementen vorgegeben ist.

5. Dynamometer nach einem der Ansprüche 1, 2 oder 3 dadurch gekennzeichnet, dass jedes kristallographisch orientierte Aufnehmerelement als Ganzes in Bezug auf das durch die Senkrechte auf den Krafteinleitungsplatten (6,11) und deren Kanten gegebene Koordinatensystem ausgerichtet ist.

6. Dynamometer nach einem der Ansprüche 1, 2, 4 oder 5 dadurch gekennzeichnet, dass das Aufnehmerelement aus einer Trägerplatte (3) und höchstens zwei Piezoelementen (1,5) besteht.

7. Dynamometer nach einem der vorhergehenden Ansprüche, dadurch gekennzeichnet, dass die Trägerplatte (3) rechteckig ist.

8. Dynamometer nach einem der vorhergehenden Ansprüche, dadurch gekennzeichnet, dass zusätzlich zu den Aufnehmerelementen auch Ersatzelemente (14) zwischen den Krafteinleitungsplatten (6,11) angeordnet sind.

9. Dynamometer nach einem der vorhergehenden Ansprüche, dadurch gekennzeichnet, dass Aufnehmer- und/oder Ersatzelemente (14) mit zentralen Bohrungen (12) vorgesehen sind.

10. Dynamometer nach einem der vorhergehenden Ansprüche, dadurch gekennzeichnet, dass die Krafteinleitungsplatten (6,11) durch Vorspannschrauben (15) zusammengespannt sind.

11. Dynamometer nach einem der vorhergehenden Ansprüche, dadurch gekennzeichnet, dass die Piezoelemente (1,5) durch einen elektrisch leitenden Kleber (8) mit den leitenden Schichten der Trägerplatten (2,4) und/oder mit den Krafteinleitungsplatten (6,11) verbunden sind.

12. Dynamometer nach einem der vorhergehenden Ansprüche, gekennzeichnet durch eine Isolatorplatte oder einen -film (16) mit elektrischen Leiterbahnen, wobei die Signalübertragung von den Aufnehmerelementen zu den Leiterbahnen über Anschlussflächen (7) an den Aufnehmerelementen erfolgt.

13. Dynamometer nach Anspruch 12, dadurch gekennzeichnet, dass das äussere Ende der Leiterbahnen mit Lötaugen (17) versehen ist.

14. Dynamometer nach einem der vorhergehenden Ansprüche, dadurch gekennzeichnet, dass die elektrischen Funktionen mindestens teilweise in das Dynamometer integriert sind.

15. Dynamometer gemäss einem der vorhergehenden Ansprüche, dadurch gekennzeichnet, dass an den Ecken eines Rechteckes, von dem zwei Seiten parallel zur X-Richtung der Krafteinleitungsplatten, die zwei anderen parallel zu deren Y-Richtung verlaufen, Aufnehmerelemente (I,II,III,IV) derart ausgerichtet sind, dass sie senkrecht zu den Krafteinleitungsplatten auf Druck und dass je zwei Aufnehmerelemente in einer zu einem Seitenpaar des Rechteckes parallelen Richtung auf Schub empfindlich sind.

16. Dynamometer gemäss einem der vorhergehenden Ansprüche, mit zwei Krafteinleitungsplatten (16,11) und einem dazwischen liegenden Aufnehmerelement, dadurch gekennzeichnet, dass die Richtung (28) der Schubempfindlichkeit auf einer der Krafteinleitungsplatten (6,11) markiert ist.

17. Dynamometer gemäss einem der vorhergehenden Ansprüche, dadurch gekennzeichnet, dass das Dynamometer durch Vergussmassen (29) gegenüber umgebenden Teilen abgedichtet und/oder in seiner Lage fixiert ist.

18. Dynamometer gemäss einem der vorhergehenden Ansprüche, dadurch gekennzeichnet, dass die Messempfindlichkeit durch Abstimmung der Höhendifferenz und/oder der Elastizitätsmodulen von Distanzplatten (32) und der Aufnehmerelemente zu den Krafteinleitungsplatten (6,11) einstellbar ist.

19. Dynamometer nach einem der vorhergehenden Ansprüche, dadurch gekennzeichnet, dass die Aufnehmerelemente gehäuselos zwischen den Krafteinleitungsplatten (6,11) gehalten sind.

## Claims

1. Multicomponent dynamometer for measuring forces and/or torques, especially in metal cutting operations, having at least one piezoelectric transducer element arranged between a pair of force introduction plates (6, 11), consisting of at least two piezoelectric elements (1, 5, 23, 24, 25) of which one is sensitive to shear essentially in the plane of the force introduction plates, characterized by the piezoelectric elements (1, 5, 23, 24, 25), the other of which is sensitive to pressure in a direction essentially normal to the plane of the force introduction plates (6, 11), being joined with an insulating carrier plate (3, 27) between them and oriented crystallographically in relation to the coordinate system $x_A$, $y_A$, $z_A$ given by the carrier plate (3, 27).

2. Dynamometer according to claim 1, characterized by at least two piezoelectric transducer elements having the shear-sensitive piezoelectric element (1) of one of the transducer elements responding to shear forces in a direction essentially parallel to one edge of the force introduction plates (6, 11), and that of the other transducer element responding to shear forces in a direction essentially normal to this.

3. Multicomponent dynamometer for measuring forces and/or torques especially in metal cutting operations, having at least one piezoelectric transducer element arranged between a pair of force introduction plates (6, 11), consisting of at least two piezoelectric elements (23, 24, 25), of which at least two are sensitive to shear essentially in the plane of the force introduction plates, characterized by the transducer element comprising three or more piezoelectric elements (23, 24, 25) joined with insulating carrier plates (26, 27) arranged between them and oriented crystallographically in relation to the coordinate system $x_A$, $y_A$, $z_A$ given by the carrier plates (26, 27), whereby at least one of the piezoelectric elements is sensitive to pressure in a direction essentially normal to the plane of the force introduction plates and the other piezoelectric elements, two at least, are sensitive to shear in directions essentially normal to each other, and one of the shear-sensitive piezoelectric elements is oriented essentially parallel to one edge direction of the force introduction plates.

4. Dynamometer according to claims 1, 2 or 3, characterized by the crystallographic orientation of the piezoelectric elements (1, 5, 23, 24, 25) in relation to the coordinate axes ($x_A$, $y_A$, $z_A$) of the carrier plates (3, 26, 27) being given by the edges of the piezoelectric elements or by marks on these.

5. Dynamometer according to one of claims 1, 2 or 3, characterized by each crystallographically oriented transducer element as a whole being oriented in relation to the coordinate system given by the normal to the force introduction plates (6, 11) and the edges of these.

6. Dynamometer according to one of claims 1, 2, 4 or 5, characterized by the transducer element consisting of a carrier plate (3) and not more than two piezoelectric elements (1, 5).

7. Dynamometer according to one of the foregoing claims, characterized by the carrier plate (3) being rectangular.

8. Dynamometer according to one of the foregoing claims, characterized by the arrangement of substitute elements (14) between the force introduction plates (6, 11) in addition to the transducer elements.

9. Dynamometer according to one of the foregoing claims, characterized by individual transducer and/or substitute elements (14) being provided with central holes (12).

10. Dynamometer according to one of the foregoing claims, characterized by the force introduction plates (6, 11) being clamped together by preloading screws (15).

11. Dynamometer according to one of the foregoing claims, characterized by the piezoelectric elements (1, 5) being joined to the conductive layers of the carrier plates (2, 4) and/or to the force introduction plates (6, 11) by an electrically conductive adhesive (8).

12. Dynamometer according to one of the foregoing claims, characterized by an insulator plate or film (16) with electrical printed wiring conductors, whereby signal transmission from the transducer elements to the printed wiring conductors takes place via connecting surfaces (7) on the transducer elements.

13. Dynamometer according to claim 12, characterized by the outer ends of the printed wiring conductors being provided with soldering eyelets (17).

14. Dynamometer according to one of the foregoing claims, characterized by the electrical functions being integrated in the dynamometer at least partially.

15. Dynamometer according to one of the foregoing claims, characterized by four transducer elements (I, II, III, IV) positioned at the corners of a rectangle with two sides parallel to the X direction of the force introduction system and two sides parallel to its Y direction being oriented so that they are sensitive to pressure normal to the force introduction plates and each pair of them is sensitive to shear in one of the directions parallel to the two pairs of rectangle sides.

16. Dynamometer according to one of the foregoing claims, with two force introduction plates (16, 11) and a transducer element between them, characterized by the direction (29) of shear sensitivity being marked on one of the force introduction plates (6, 11).

17. Dynamometer according to one of the foregoing claims, characterized by the dynamometer being sealed against the surrounding parts and/or fixed in its position by encapsulation compounds (29).

18. Dynamometer according to one of the foregoing claims, characterized by the ability to adapt the measuring sensitivity by matching the height difference and/or the moduli of elasticity of distance plates (32) and transducer elements with force introduction plates (6, 11).

19. Dynamometer according to one of the foregoing claims, characterized by the transducer elements being joined to the force introduction plates (6, 11) without a housing.

**Revendications**

1. Dynamomètre à plusieurs composantes pour la mesure de forces et/ou de moments en particulier lors de l'usinage par coupe avec au moins un élément de capteur piézo-électrique aménagé entre une paire de plaques d'introduction des efforts (6, 11) composée d'au moins deux éléments piézo-électriques (1, 5, 23, 24, 25) dont l'un est essentiellement sensible au effort de cisaillement dans le plan des plaques d'introduction des efforts et l'autre sensible selon une essentiellement perpendiculaire au plan des plaques d'introduction des efforts (6, 11), caractérisé par le fait que les éléments piézo-électriques (1, 5, 23, 24, 25) sont reliés par une plaque-support (3, 27) isolante intercalée entre les éléments et orientés du point de vue cristallographique par rapport au système de coordonnés xA, yA, zA prédéterminé par les plaques-supports (3, 27).

2. Dymanomètre selon revendication 1 caractérisé par le fait que, dans le cas d'au moins deux éléments de capteur piézo-électrique, l'élément piézo-électrique (1) sensible au cisaillement de l'un des éléments-capteurs est parallèle essentiellement selon une direction à une arête des plaques d'introduction des efforts (6, 11) et que l'élément piézo-électrique de l'autre élément-capteur piézo-électrique est orienté selon une direction essentiellement perpendiculaire, sensible aux forces de cisaillement.

3. Dynamomètre à plusieurs composantes pour la mesure de forces et/ou de moments en particulier lors de l'usinage par coupe avec au moins un élément-capteur piézo-électrique amenagé entre une paire de plaque d'introduction des efforts (6, 11) composé d'au moins deux éléments piézo-électriques (23, 24, 25) dont au moins deux sont sensibles au cisaillement dans le plan des plaques introduction des efforts, caractérisé par le fait l'élément-capteur comprend trois éléments piézo-électriques (23, 24, 25) ou davantage reliés entre eux entre lesquels sont intercallés des plaques-supports isolantes (26, 27) et orientés du point de vue cristallographique selon le système de coordonnée xA, yA, zA prédéterminé par les plaques-supports (25, 27), l'un au moins des éléments piézo-électriques étant sensible à la pression selon une direction essentiellement normale au plan des plaques d'introduction des efforts et les autres éléments piézo-électriques, au moins deux, étant sensibles au cisaillement selon des directions sensiblement perpendiculaires entre elles, l'un de ces éléments piézo-électrique étant essentiellement parallèles à l'une des arêtes des plaques d'introduction des efforts.

4. Dynamomètre selon revendication 1, 2 ou 3 caractérisé par le fait que l'orientation cristallographique des éléments piézo-électriques (1, 5, 23, 24, 25) par rapport au système de coordonnés xA, yA, zA des plaques-supports (3, 26, 27) est définie par les arêtes de l'élément piézo-électrique ou par des repères sur les éléments piézo-électriques.

5. Dynamomètre selon l'une des revendication de brevet 1, 2, ou 3 caractérisé par le fait que chaque élément-capteur est orienté, en totalité, du point de vue cristallographique, par rapport au système de coordonnées défini par la normale aux plaques d'introduction des efforts (6, 11) et les arêtes de ces dernières.

6. Dynamomètre selon l'une des revendications de brevêt 1, 2, 4 ou 5 caractérisé par le fait que l'élément-capteur se compose d'une plaque-support (3) et d'au maximum deux éléments piézo-électriques (1, 5).

7. Dynamomètre selon l'une des revendications précédentes caractérisé par le fait que la plaque-support (3) est rectangulaire.

8. Dynamomètre selon l'une des revendications de brevêt précédentes caractérisé par le fait qu'outre les éléments-capteurs, des éléments de rechange (14) sont aménagés entre les plaques d'introduction des efforts (6, 11).

9. Dynamomètre selon l'une des revendications de brevêt ci-dessus, caractérisé par le fait que les éléments-capteurs ou les éléments de rechange (14) sont munie d'un alésage central (12).

10. Dynamomètre selon l'une des revendications de brevêt ci-dessus, caractérisé par le fait que les plaques d'introduction des efforts (6, 11) sont comprimées entre elles par des vis de précontrainte (15).

11. Dynamomètre selon l'une des revendications de brevêt ci-dessus, caractérisé par le fait que les éléments piézo-électriques (1, 5) sont collés sur les couches conductriques des plaques-supports (2, 4) ou sur les plaques d'introduction des efforts au moyen de col le (8) conductrice du point de vue électrique.

12. Dynamomètre selon l'une des revendications de brevêt ci-dessus, caractérisé par une plaque isolante ou un film isolant (16) muni de bandes conductrices, la transmission du signal des éléments-capteurs aux bandes conductrices s'effectuant par des faces de contact (7) sur les éléments-capteurs.

13. Dynamomètre selon revendication 12, caractérisé par le fait que l'extrémité externe des bandes conductrices est munie de points de soudure (17).

14. Dynamomètre selon l'une des revendications de brevêt précédentes caractérisé par le fait que les fonctions électriques sont au moins partiellement intégrées dans le dynamomètre.

15. Dynamomètre selon l'une des revendications de brevêt précédentes caractérisé par le fait que des éléments-capteurs sont aménagés aux coins d'un rectangle dont deux côtés sont parallèles à la direction dex x, les deux autres étant parallèles à la direction des y des plaques d'introduction des efforts de telle sorte qu'ils soient sensibles à la pression selon une direction perpendiculaire aux plaques d'introduction des efforts et que deux des éléments-capteurs soient sensibles au cisaillement selon une direction parallèle à l'une des paires d'arêtes du rectangle.

16. Dynamomètre selon l'une des revendications de brevêt précédentes avec deux plaques d'introduction des efforts (16, 11) entre lesquelles est intercallé un élément-capteur, caractérisé par le fait que la direction (28) de la sensibilité au cisaillement est repérée sur l'une des plaques d'introduction des efforts (6, 11).

17. Dynamomètre selon l'une des revendications de brevêt précédentes caractérisé par le fait que le dynamomètre est rendu étanche par rapport aux pièces avoisinantes au moyen de produits adéquats (29) et/ou fixé dans sa position.

18. Dynamomètre selon l'une des revendications de brevêt précédentes caractérisé par le fait que la sensibilité de mesure est ajustable en jouant sur la différence de hauteur et/ou sur le module d'élasticité des entretoises (32) et que l'élément-capteur est règlable par rapport aux plaques d'introduction des efforts (6, 11).

19. Dynamomètre selon l'une des revendications précédentes caractérisé par le fait que les éléments-capteurs ne possèdent pas de boîtier et sont maintenus entre les plaques d'introduction des efforts.

Fig. 1

Fig. 2

Fig. 3

Fig. 4

Fig. 5

Fig. 6

Fig. 7

Fig. 8

Fig. 9

FIG. 10

Fig. 11

Fig. 12

A — A'

Fig. 13

B — B'

## Fig. 14

## Fig. 15